# EUROPEAN PATENT APPLICATION

(11) **EP 4 618 559 A1**
(43) Date of publication of application: **17.09.2025**
(21) Application number: 23887874.8
(22) Date of filing: 31.10.2023
(51) Int. Cl.: H04N 21/431

(54) **ACTIVITY INFORMATION DISPLAY METHOD AND APPARATUS, DEVICE, AND STORAGE MEDIUM**

(30) Priority: 07.11.2022 CN 202211391671
(71) Applicant: Beijing Zitiao Network Technology Co., Ltd., Beijing 100190 (CN)
(72) Inventor: LI, Zhen, Beijing 100028 (CN); GUAN, Sainan, Beijing 100028 (CN); LIAO, Sanfeng, Beijing 100028 (CN); REN, Siyuan, Beijing 100028 (CN)
(74) Representative: Marks & Clerk LLP
(86) International application number: PCT/CN2023/128618
(87) International publication number: WO 2024/099184

(57) **Abstract**

The present application discloses an activity information presentation method, apparatus and device, and a storage medium. The method includes: presenting, on a video playback page and based on a video stream, an activity information card corresponding to a target activity, where the activity information card presents at least one activity live streaming room entry; and in response to a trigger operation for a target activity live streaming entry in the at least one activity live streaming entry, jumping from the video playback page to a live streaming room page corresponding to the target activity live streaming entry, to perform live streaming presentation of the target activity.

## Description

### CROSS-REFERENCE TO RELATED APPLICATION(S)

This application claims priority to Chinese Application No. 202211391671.6, filed in CNIPA on November 07, 2022, and entitled "Activity Information Presentation Method, Apparatus and Device, and Storage Medium", the disclosure of which is incorporated herein by reference in its entirety.

### FIELD

The present disclosure relates to the field of data processing, and in particular to an activity information presentation method, apparatus and device, and a storage medium.

### BACKGROUND

In the related art, activity information is presented in a specific area on an activity page, and a user needs to enter the activity page to view activity-related information. It can be seen that a presentation mode of the activity information is single, and thus cannot meet diversified presentation requirements of the user, thereby affecting the user experience.

### SUMMARY

In order to solve the above technical problems, embodiments of the present disclosure provide an activity information presentation method, apparatus and device, and a storage medium.

In a first aspect, the present disclosure provides an activity information presentation method, including:
presenting, on a video playback page and based on a video stream, an activity information card corresponding to a target activity, wherein the activity information card belongs to the video stream and has a presentation sequence relationship with a video in the video stream, and the activity information card presents at least one activity live streaming room entry; and
in response to a trigger operation for a target activity live streaming entry in the at least one activity live streaming room entry, jumping from the video playback page to a live streaming room page corresponding to the target activity live streaming entry, wherein the live streaming room page is used for performing live streaming presentation of the target activity.

In an optional implementation, the activity information card further presents an activity information presentation entry corresponding to the target activity, and the method further includes:
in response to a trigger operation for the activity information presentation entry, jumping from the video playback page to an activity information presentation page corresponding to the target activity, wherein the activity information presentation page is used for presenting preset activity information corresponding to the target activity.

In an optional implementation, the activity information card further presents a preset feedback control corresponding to the target activity, and the method further includes:
in response to a trigger operation for the preset feedback control, determining, based on the video stream, a target switching video corresponding to the activity information card; and
switching from the activity information card to the target switching video on the video playback page, and playing the target switching video on the video playback page.

In an optional implementation, the method further includes:
in response to a trigger operation for the preset feedback control, starting timing, and shielding the activity information card corresponding to the target activity in a case where the timing does not reach a preset duration.

In an optional implementation, the target activity includes at least one sub-activity, and there is a mapping relationship between the at least one activity live streaming room entry and the at least one sub-activity; and the live streaming room page is used for performing live streaming presentation of a sub-activity corresponding to the target activity live streaming entry.

In an optional implementation, the target activity includes a target competition activity, and the sub-activity includes a schedule of the target competition activity.

In an optional implementation, live streaming state information of a corresponding live streaming room is presented at the activity live streaming room entry, wherein the live streaming state information includes state information of waiting for live streaming, state information of in live streaming, and/or state information of live streaming ended.

In an optional implementation, presenting, on the video playback page and based on the video stream, the activity information card corresponding to the target activity includes:

within an activity period corresponding to the target activity, presenting, on the video playback page and based on the video stream, the activity information card corresponding to the target activity.

In a second aspect, the present disclosure provides an activity information presentation apparatus, including:
a presentation module, configured to present, on a video playback page and based on a video stream, an activity information card corresponding to a target activity, wherein the activity information card belongs to the video stream and has a presentation sequence relationship with a video in the video stream, and the activity information card presents at least one activity live streaming room entry; and
a first jumping module, configured to: in response to a trigger operation for a target activity live streaming entry in the at least one activity live streaming room entry, jump from the video playback page to a live streaming room page corresponding to the target activity live streaming entry, wherein the live streaming room page is used for performing live streaming presentation of the target activity.

In a third aspect, the present disclosure provides a computer-readable storage medium, wherein an instruction is stored in the computer-readable storage medium, and when the instruction runs on a terminal device, the terminal device is caused to implement the above method.

In a fourth aspect, the present disclosure provides an activity information presentation device, including: a memory, a processor, and a computer program stored in the memory and executable on the processor, wherein the processor, when executing the computer program, implements the above method.

In a fifth aspect, the present disclosure provides a computer program product, including a computer program/instruction, wherein the computer program/instruction, when executed by a processor, implements the above method.

Compared with the prior art, the technical solutions provided in the embodiments of the present disclosure at least have the following advantages:

The embodiments of the present disclosure provides an activity information presentation method, including: presenting, on a video playback page and based on a video stream, an activity information card corresponding to a target activity, wherein the activity information card belongs to the video stream and has a presentation sequence relationship with a video in the video stream, and the activity information card presents at least one activity live streaming room entry; and in response to a trigger operation for a target activity live streaming entry in the at least one activity live streaming room entry, jumping from the video playback page to a live streaming room page corresponding to the target activity live streaming entry, to perform live streaming presentation of the target activity. It can be seen that in the embodiments of the present disclosure, the activity information card corresponding to the target activity may be presented based on the video stream; moreover, a function is supported that a user jumps from the video playback page for presenting the activity information card to the live streaming room page of the target activity, thereby enriching the presentation mode of the activity information, further meeting the diversified presentation requirements of the user, and improving the experience of the user.

### BRIEF DESCRIPTION OF THE DRAWINGS

The drawings herein are incorporated in and constitute a part of the present specification, illustrate embodiments conforming to the present disclosure, and serve to explain the principles of the present disclosure together with the specification.

To illustrate technical solutions in the embodiments of the present disclosure or in the prior art more clearly, a brief introduction on the drawings which are needed in the description of the embodiments or the prior art is given below. Apparently, for those ordinary skilled in the art, other drawings may also be obtained according to these drawings without creative efforts.
FIG. 1 is a flowchart of an activity information presentation method provided in an embodiment of the present disclosure,
FIG. 2 is a schematic diagram of a video playback page provided in an embodiment of the present disclosure;
FIG. 3 is a schematic structural diagram of an activity information presentation apparatus provided in an embodiment of the present disclosure; and
FIG. 4 is a schematic structural diagram of an activity information presentation device provided in an embodiment of the present disclosure.

### DETAILED DESCRIPTION OF EMBODIMENTS

In order to understand the above objectives, technical solutions and advantages of the present disclosure more clearly, the solutions of the present disclosure will be further described below. It should be noted that, in the case of no conflict, the embodiments of the present disclosure and the features in the embodiments may be combined with each other.

In the following description, numerous specific details are set forth to fully understand the present disclosure, but the present disclosure may also be implemented in other manners different from those described herein; and obviously, the embodiments in the specification are only a part, but not all, of the embodiments of the present disclosure.

In the related art, activity information is presented in a specific area on an activity page, and a user needs to enter the activity page to view activity-related information. It can be seen that a presentation mode of the activity information is single, and thus cannot meet the diversified presentation requirements of the user, thereby affecting the experience of the user.

To this end, an embodiment of the present disclosure provides an activity information presentation method, including: presenting, on a video playback page and based on a video stream, an activity information card corresponding to a target activity, where the activity information card belongs to the video stream and has a presentation sequence relationship with a video in the video stream, and the activity information card presents at least one activity live streaming room entry; and in response to a trigger operation for a target activity live streaming entry in the at least one activity live streaming entry, jumping from the video playback page to a live streaming room page corresponding to the target activity live streaming entry, to perform live streaming presentation of the target activity. It can be seen that in the embodiment of the present disclosure, the activity information card corresponding to the target activity may be presented based on the video stream, meanwhile, a function is supported that the user jumps from the video playback page for presenting the activity information card to the live streaming room page of the target activity, thereby enriching the presentation mode of the activity information, further meeting the diversified presentation requirements of the user, and improving the experience of the user.

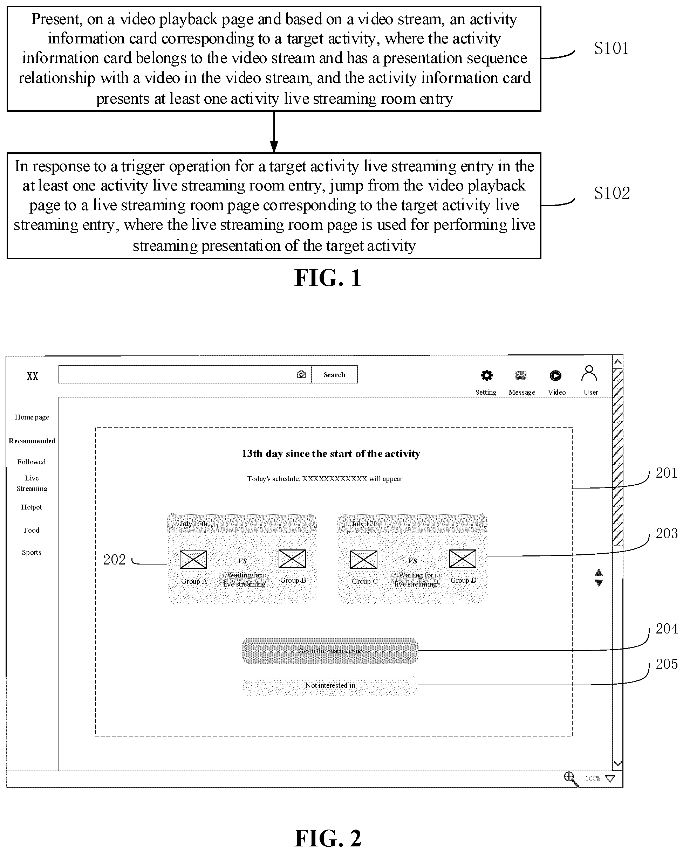

On this basis, an embodiment of the present disclosure provides an activity information presentation method, referring to FIG. 1, FIG. 1 is a flowchart of an activity information presentation method provided in an embodiment of the present disclosure, and the method includes the following:
S101: presenting, on a video playback page and based on a video stream, an activity information card corresponding to a target activity.

The activity information card belongs to the video stream and has a presentation sequence relationship with a video in the video stream, and the activity information card presents at least one activity live streaming room entry.

The video processing method provided in the embodiment of the present disclosure may be applied to a client, for example, the client may include a client deployed on a desktop computer, a client deployed on a notebook computer, etc.

In the embodiment of the present disclosure, the target activity may include any type of activity, such as a competition activity, a literary and artistic activity, and the like. The competition activity may include a sports competition, a talent competition, and the like, for example, a football competition, a singing competition, and the like; and the literary and artistic activity may include a cultural show, a vocal concert, and the like. It is worth noting that the type of the target activity is not limited in the embodiment of the present disclosure, and in addition, the target activity may be an ongoing activity, which may be referred to as an activity within an activity period.

In the embodiment of the present disclosure, the activity information card is used for presenting related information of the target activity, for example, activity content introduction information, activity time information, and the like. For example, assuming that the target activity is a sports game that is held in a region A and has an activity period from July 5 to July 20, then the related information of the target activity, such as "held in the region A" and "the activity period is from July 5 to July 20th", and the like, may be presented on the activity information card corresponding to the target activity.

In the embodiment of the present disclosure, the activity information card belongs to the video stream, the video stream includes a plurality of videos having a playing sequence, and the activity information card may be located between the plurality of videos having the playing sequence in the video stream, and has a presentation sequence relationship with the plurality of videos. For example, the video stream includes 10 videos having a playing sequence, and after the activity information card is after the fifth video, that is, at the end of the playback of the fifth video in the video stream, the activity information card is presented in sequence.

In the embodiment of the present disclosure, the video stream may be obtained after the activity information card corresponding to the target activity is inserted between the plurality of videos having the playing sequence, that is, the plurality of videos having the playing sequence and the activity information card constitute the video stream together, and the purpose of presenting the activity information card based on the video stream may be achieved subsequently.

In practical applications, in order to improve the experience of the user when viewing the videos, the frequency of inserting, into the video stream, the activity information card corresponding to the target activity may be controlled. Optionally, it may be controlled that the activity information card corresponding to one target activity is inserted after every N videos.

In practical applications, in order to reduce the influence on the video viewing experience of the user, the frequency of presenting the activity information card on the video playback page may be set as once a day, that is, within the activity period corresponding to the target activity, the activity information card may be presented on the video playback page only once every day.

In the embodiment of the present disclosure, during the process of playing the videos in the video stream on the video playback page, the user may also switch the playback of the videos in the video stream by a video switching operation, where the video switching operation may include an up-down sliding operation, and may further include a click operation acting on a video switching control of the video playback page, and the like, to implement a function of switching the currently presented video.

In an optional implementation, in a case where the activity information card corresponding to the target activity is presented on the video playback page, if a switching operation acting on the video playback page is received, the activity information card may be switched to a next video adjacent to the activity information card in the video stream, and the video is played on the video playback page.

In the embodiment of the present disclosure, the presentation occasion of the activity information card may be controlled within the activity period corresponding to the target activity, and specifically, within the activity period corresponding to the target activity, the activity information card corresponding to the target activity is presented on the video playback page based on the video stream.

For example, assuming that the activity period corresponding to the target activity is from July 5 to July 20, then starting from July 5th to the end of July 20th, during this period, the activity information card corresponding to the target activity may be controlled to be presented on the video playback page based on the video stream, to improve the presentation effect of the activity information card corresponding to the target activity.

In the embodiment of the present disclosure, the related information of the target activity, which is presented on the activity information card corresponding to the target activity, may include at least one activity live streaming room entry, and the activity live streaming room entry is used for entering a live streaming room page corresponding to the target activity.

As shown in FIG. 2, FIG. 2 is a schematic diagram of a video playback page provided in an embodiment of the present disclosure, where an activity information card 201 corresponding to a target activity is presented on the video playback page, and specifically, an activity live streaming room entry 202 and an activity live streaming room entry 203 are presented on the activity information card.

In an optional implementation, the target activity may include at least one sub-activity, and there is a mapping relationship between activity live streaming room entries and sub-activities. Each activity live streaming room entry is used for triggering to enter a live streaming room page of a corresponding sub-activity, and the live streaming room page of the sub-activity is used for performing live streaming presentation of the sub-activity.

In the embodiment of the present disclosure, the target activity may include a target competition, and correspondingly, the sub-activity may include a schedule of the target competition. For example, assuming that the target competition is a certain sports competition, then the schedule of the target competition may include a specific schedule in the sports competition, for example, a schedule of group A VS group B, a schedule of group C VS group D, etc.

Correspondingly, the activity live streaming room entry 202 corresponding to the schedule of group A VS group B and the activity live streaming room entry 203 corresponding to the schedule of group C VS group D are presented on the activity information card 201 shown in FIG. 2.

Specifically, a competition time, session information and the like of the corresponding schedule may be displayed at the activity live streaming room entry, for example, information of "July 17th" and "group A VS group B" may be displayed at the activity live streaming room entry 202 corresponding to the schedule of group A VS group B. In addition, competition team information of the corresponding schedule may also be displayed at the activity live streaming room entry, for example, information of "group A" and "group B" is displayed at the activity live streaming room entry 202 corresponding to the schedule of group A VS group B, so that the user can more intuitively learn about the related information of each schedule in the target activity via the related information of the target activity presented on the activity information card.

S102: in response to a trigger operation for a target activity live streaming entry in the at least one activity live streaming room entry, jumping from the video playback page to a live streaming room page corresponding to the target activity live streaming entry.

The live streaming room page is used for performing live streaming presentation of the target activity.

In the embodiment of the present disclosure, the target activity live streaming entry may be any activity live streaming entry presented on the activity information card. The trigger operation for the target activity live streaming entry may include a click operation, a long-press operation, and the like, which acts on the target activity live streaming entry.

In an optional implementation, when a click operation acting on the target activity live streaming entry is received, the video playback page is jumped to the live streaming room page corresponding to the target activity live streaming entry, and live streaming presentation of a sub-activity corresponding to the target activity live streaming entry is performed on the live streaming room page, and the display style and the like of the live streaming room page are not limited in the embodiment of the present disclosure.

In an optional implementation, in order to further enrich the presentation of the related information of the target activity, live streaming state information of a corresponding live streaming room may be presented at the activity live streaming room entry, where the live streaming state information includes state information of waiting for live streaming, state information of in live streaming, and/or state information of live streaming ended. By means of the live streaming state information, the user can learn about the live streaming state of the corresponding live streaming room to select a live streaming room of interest.

As shown in FIG. 2, words "waiting for live streaming" are presented at the activity live streaming room entry 202, which indicates that the live streaming of the schedule of group A VS group B corresponding to the activity live streaming room entry 202 is not started yet. When a click operation acting on the live streaming room entry 202 is received, the video playback page shown in FIG. 2 is jumped to a live streaming room page of the schedule of group A VS group B, where the information about activity countdown may be presented on the live streaming room page for prompting the user of the duration to a start time of the schedule of group A VS group B.

Similarly, assuming that words "in live streaming" are presented at the activity live streaming room entry, it indicates that a sub-activity corresponding to the activity live streaming room entry is in progress, and when a click operation acting on the activity live streaming room entry is received, the video playback page is jumped to a live streaming room page corresponding to the sub-activity, to perform live streaming presentation of the sub-activity.

Assuming that word "ended" is presented at the activity live streaming room entry, it indicates that a sub-activity corresponding to the activity live streaming room entry has ended, when a click operation acting on the activity live streaming room entry is received, the video playback page is jumped to a live streaming room page corresponding to the sub-activity, and the sub-activity of which the live streaming has ended may be played back on the live streaming room page.

In the activity information presentation method provided in the embodiment of the present disclosure, the activity information card corresponding to the target activity is presented on the video playback page based on the video stream, where the activity information card belongs to the video stream and has the presentation sequence relationship with a video in the video stream, and the activity information card presents at least one activity live streaming room entry; and in response to the trigger operation for the target activity live streaming entry in the at least one activity live streaming entry, the video playback page is jumped to the live streaming room page corresponding to the target activity live streaming entry, to perform live streaming presentation on the target activity. It can be seen that in the embodiment of the present disclosure, the activity information card corresponding to the target activity may be presented based on the video stream; moreover, a function is supported that the user jumps from the video playback page for presenting the activity information card to the live streaming room page of the target activity, thereby enriching the presentation mode of the activity information, further meeting the diversified presentation requirements of the user, and improving the experience of the user.

In practical applications, not only can the activity live streaming entry corresponding to the target activity be presented on the activity information card, but an activity information presentation entry corresponding to the target activity may also be presented on the activity information card. If the user wants to trigger the presentation of the activity information presentation page corresponding to the target activity, the user may trigger, based on a trigger operation for the activity information presentation entry, the jumping from the video playback page to the activity information presentation page corresponding to the target activity, where the activity information presentation page corresponding to the target activity may be an activity landing page of the target activity, for example, an h5 page, etc.

In the embodiment of the present disclosure, the trigger operation for the activity information presentation entry may include a click operation acting on the activity information presentation entry, and the like.

As shown in FIG. 2, an activity information presentation entry 204 is provided on the video playback page, and prompt words, such as a "go to the main venue", may be displayed at the activity information presentation entry 204. When a click operation acting on the activity information presentation portal 204 is received, it is jumped from the video playback page shown in FIG. 2 to the activity information presentation page, preset activity information corresponding to the target activity is presented on the activity information presentation page, and the user may learn more specific activity information about the target activity by browsing the preset activity information corresponding to the target activity. The presentation style of the activity information presentation page is not limited in the embodiment of the present disclosure.

In an optional implementation, a preset feedback control corresponding to the target activity may be further presented on the activity information card, and the user may trigger, by a trigger operation for the preset feedback control, the switching from the activity information card to a target switching video.

In an optional implementation, the preset feedback control may be used for triggering an operation that is not interested in the current activity information card, and the switching from the activity information card to other videos in the video stream on the video playback page is triggered by the trigger operation for the preset feedback control. To this end, an embodiment of the present disclosure provides a method for switching from the activity information card to the target switching video, and the method specifically includes:

first, in response to a trigger operation for the preset feedback control, determining, based on the video stream, the target switching video corresponding to the activity information card; and then, switching from the activity information card to the target switching video on the video playback page, and playing the target switching video on the video playback page, where the target switching video may be a next video adjacent to the activity information card in the video stream.

In the embodiment of the present disclosure, the trigger operation for the preset feedback control may include a click operation acting on the preset feedback control, and the like.

As shown in FIG. 2, when a click operation acting on a preset feedback control 205 is received, the next video adjacent to the activity information card in the video stream is firstly determined as the target switching video, then the activity information card is switched to the target switching video on the video playback page, and the target switching video is played on the video playback page.

In an optional implementation, in order to ensure the experience of the user when viewing videos, when the trigger operation for the preset feedback control is received, timing may be started, and activity information corresponding to the target activity is shielded within a period of the timing reaching a preset duration.

In the embodiment of the present disclosure, shielding the activity information corresponding to the target activity within the period of the timing reaching the preset duration refers to starting timing upon receiving the trigger operation acting on the preset feedback control, and shielding the activity information card corresponding to the target activity in a case where the timing does not reach the preset duration, that is, the activity information card corresponding to the target activity will not be presented to the current user within this period of time.

Assuming that the preset duration is 7 days (i.e., 168 hours), when the click operation acting on the preset feedback control is received, timing is started from 0: 00 until the timing duration reaches 7 days, and the activity information card corresponding to the target activity is not presented on the video playback page within this period of time.

In an optional implementation, words "Xth day since the start of the activity" may be further presented on the activity information card for prompting the user that the target activity has been performed for X days.

In another optional implementation, the preset feedback control may be used for triggering an operation of interest to the current activity information card, for example, an operation for triggering the collection of the current activity information card, and the like. The number, the type and the like of the preset feedback controls presented on the activity information card are not limited in the embodiment of the present disclosure.

In the embodiment of the present disclosure, the function of jumping from the video playback page to the activity information presentation page corresponding to the target activity may be implemented by the trigger operation for the activity information presentation entry, so that the user learns about more information related to the target activity by browsing the preset activity information corresponding to the target activity; and in addition, in the embodiment of the present disclosure, the activity information card corresponding to the target activity may be presented based on the video stream, meanwhile, a function is supported that the user jumps from the video playback page for presenting the activity information card to the live streaming room page of the target activity, thereby enriching the presentation mode of the activity information, further meeting the diversified presentation requirements of the user, and improving the experience of the user.

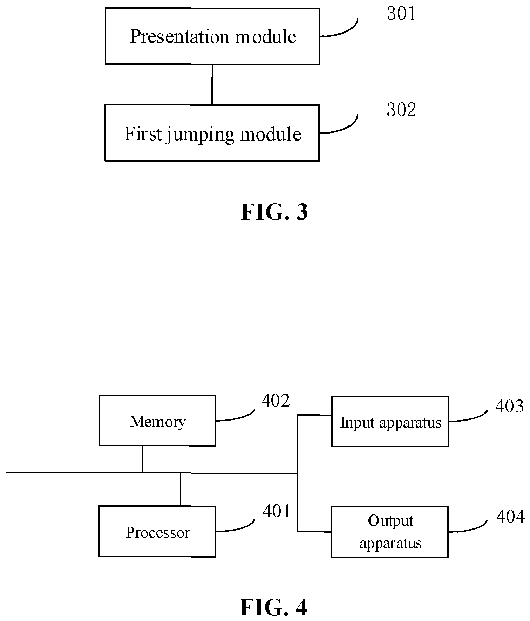

Based on the above method embodiments, the present disclosure further provides an activity information presentation apparatus, referring to FIG. 3, FIG. 3 is a schematic structural diagram of an activity information presentation apparatus provided in an embodiment of the present disclosure, and the apparatus includes:
a presentation module, configured to present, on a video playback page and based on a video stream, an activity information card corresponding to a target activity, where the activity information card belongs to the video stream and has a presentation sequence relationship with a video in the video stream, and the activity information card presents at least one activity live streaming room entry; and
a first jumping module, configured to: in response to a trigger operation for a target activity live streaming entry in the at least one activity live streaming room entry, jump from the video playback page to a live streaming room page corresponding to the target activity live streaming entry, where the live streaming room page is used for performing live streaming presentation of the target activity.

In an optional implementation, the activity information card further presents an activity information presentation entry corresponding to the target activity, and the apparatus further includes:
a second jumping module, configured to: in response to a trigger operation for the activity information presentation entry, jump from the video playback page to an activity information presentation page corresponding to the target activity, wherein the activity information presentation page is used for presenting preset activity information corresponding to the target activity.

In an optional implementation, the activity information card further presents a preset feedback control corresponding to the target activity, and the apparatus further includes:
a determination module, configured to: in response to a trigger operation for the preset feedback control, determine, based on the video stream, a target switching video corresponding to the activity information card; and
a switching module, configured to switch from the activity information card to the target switching video on the video playback page, and play the target switching video on the video playback page.

In an optional implementation, the apparatus further includes:
a shielding module, configured to: in response to a trigger operation for the preset feedback control, start timing, and shield the activity information card corresponding to the target activity in a case where the timing does not reach a preset duration.

In an optional implementation, the target activity includes at least one sub-activity, and there is a mapping relationship between the at least one activity live streaming room entry and the at least one sub-activity; and the live streaming room page is used for performing live streaming presentation of a sub-activity corresponding to the target activity live streaming entry.

In an optional implementation, the target activity includes a target competition activity, and the sub-activity includes a schedule of the target competition activity.

In an optional implementation, live streaming state information of a corresponding live streaming room is presented at the activity live streaming room entry, where the live streaming state information includes state information of waiting for live streaming, state information of in live streaming, and/or state information of live streaming ended.

In an optional implementation, the presentation module further includes:
a presentation sub-module, configured to: within an activity period corresponding to the target activity, present, on the video playback page and based on the video stream, the activity information card corresponding to the target activity.

In the activity information presentation apparatus provided in the embodiment of the present disclosure, the activity information card corresponding to the target activity is presented on the video playback page based on the video stream, wherein the activity information card belongs to the video stream and has the presentation sequence relationship with a video in the video stream, and the activity information card presents at least one activity live streaming room entry; and in response to the trigger operation for the target activity live streaming entry in the at least one activity live streaming entry, it is jumped from the video playback page to the live streaming room page corresponding to the target activity live streaming entry, to perform live streaming presentation of the target activity. It can be seen that in the embodiment of the present disclosure, the activity information card corresponding to the target activity may be presented based on the video stream, meanwhile, a function is supported that the user jumps from the video playback page for presenting the activity information card to the live streaming room page of the target activity, thereby enriching the presentation mode of the activity information, further meeting the diversified presentation requirements of the user, and improving the experience of the user.

In addition to the above method and apparatus, an embodiment of the present disclosure further provides a computer-readable storage medium, wherein an instruction is stored in the computer-readable storage medium, and when the instruction runs on a terminal device, the terminal device is caused to implement the activity information presentation method in the embodiments of the present disclosure.

An embodiment of the present disclosure further provides a computer program product, including a computer program/instruction, where the computer program/instruction, when executed by a processor, implements the activity information presentation method in the embodiments of the present disclosure.

In addition, an embodiment of the present disclosure further provides an activity information presentation device, and referring FIG. 4, the activity information presentation device may include: a processor 401, a memory 402, an input apparatus 403 and an output apparatus 404. There may be one or more processors 401 in the activity information presentation device, and one processor is taken as an example in FIG. 4. In some embodiments of the present disclosure, the processor 401, the memory 402, the input apparatus 403 and the output apparatus 404 may be connected by using a bus or other manners, wherein it is taken as an example in FIG. 4 that the processor 401, the memory 402, the input apparatus 403 and the output apparatus 404 are connected by using a bus.

The memory 402 may be configured to store software programs and modules, and the processor 401 executes various functional applications and data processing of the activity information presentation device by running the software programs and the modules stored in the memory 402. The memory 402 may mainly include a program storage area and a data storage area, wherein the program storage area may store an operating system, an application program required by at least one function, and the like. In addition, the memory 402 may include a high-speed random access memory, and may further include a non-volatile memory, for example, at least one magnetic disk storage device, a flash memory device, or other volatile solid-state storage devices. The input apparatus 403 may be configured to receive input digit or character information, and generate a signal input related to user settings and function control of the activity information presentation device.

Specifically, in the present embodiment, the processor 401 loads executable files corresponding to processes of one or more application programs into the memory 402 according to the following instructions, and the processor 401 runs the application programs stored in the memory 402, to implement various functions of the above activity information presentation device.

It should be noted that, relational terms, such as "first", "second" and the like, herein are merely used for distinguishing one entity or operation from another entity or operation, but do not necessarily require or imply that any such actual relationship or sequence exists between these entities or operations. Moreover, the terms "include", "contain" or any other variants thereof are intended to cover non-exclusive inclusions, such that a process, a method, an article or a device including a series of elements not only includes those elements, but also includes other elements that are not explicitly listed, or also includes elements inherent to such a process, method, article or device. If there are no more restrictions, the element defined by the sentence "including a......" does not exclude the existence of other identical elements in the process, the method, the article or the device that includes the element.

The foregoing descriptions are merely specific implementations of the present disclosure, and to enable those skilled in the art to understand or implement the present disclosure. Various modifications to these embodiments will be readily apparent to those skilled in the art, and the generic principles defined herein may be implemented in other embodiments without departing from the spirit or scope of the present disclosure. Thus, the present disclosure will not be limited to these embodiments described herein, but will conform to the widest scope consistent with the principles and novel features disclosed herein.

## Claims

1. An activity information presentation method, comprising:
presenting, on a video playback page and based on a video stream, an activity information card corresponding to a target activity, wherein the activity information card belongs to the video stream and has a presentation sequence relationship with a video in the video stream, and the activity information card presents at least one activity live streaming room entry; and
in response to a trigger operation for a target activity live streaming entry in the at least one activity live streaming room entry, jumping from the video playback page to a live streaming room page corresponding to the target activity live streaming entry, wherein the live streaming room page is used for performing live streaming presentation of the target activity.

2. The method according to claim 1, wherein the activity information card further presents an activity information presentation entry corresponding to the target activity, and the method further comprises:
in response to a trigger operation for the activity information presentation entry, jumping from the video playback page to an activity information presentation page corresponding to the target activity, wherein the activity information presentation page is used for presenting preset activity information corresponding to the target activity.

3. The method according to claim 1, wherein the activity information card further presents a preset feedback control corresponding to the target activity, and the method further comprises:
in response to a trigger operation for the preset feedback control, determining, based on the video stream, a target switching video corresponding to the activity information card; and
switching from the activity information card to the target switching video on the video playback page, and playing the target switching video on the video playback page.

4. The method according to claim 3, further comprising:
in response to a trigger operation for the preset feedback control, starting timing and shielding the activity information card corresponding to the target activity in a case where the timing does not reach a preset duration.

5. The method according to claim 1, wherein the target activity comprises at least one sub-activity, and there is a mapping relationship between the at least one activity live streaming room entry and the at least one sub-activity; and the live streaming room page is used for performing live streaming presentation of a sub-activity corresponding to the target activity live streaming entry.

6. The method according to claim 5, wherein the target activity comprises a target competition, and the sub-activity comprises a schedule of the target competition.

7. The method according to claim 1, wherein live streaming state information of a corresponding live streaming room is presented at the activity live streaming room entry, wherein the live streaming state information comprises state information of waiting for live streaming, state information of in live streaming, and/or state information of live streaming ended.

8. The method according to claim 1, wherein presenting, on the video playback page and based on the video stream, the activity information card corresponding to the target activity comprises:
within an activity period corresponding to the target activity, presenting, on the video playback page and based on the video stream, the activity information card corresponding to the target activity.

9. An activity information presentation apparatus, comprising:
present, on a video playback page and based on a video stream, an activity information card corresponding to a target activity, wherein the activity information card belongs to the video stream and has a presentation sequence relationship with a video in the video stream, and the activity information card presents at least one activity live streaming room entry; and
in response to a trigger operation for a target activity live streaming entry in the at least one activity live streaming room entry, jump from the video playback page to a live streaming room page corresponding to the target activity live streaming entry, wherein the live streaming room page is used for performing live streaming presentation of the target activity.

10. A computer-readable storage medium, wherein an instruction is stored in the computer-readable storage medium, and when the instruction runs on a terminal device, the terminal device is caused to implement the method according to any of claims 1-8.

11. An activity information presentation device, comprising: a memory, a processor, and a computer program stored in the memory and executable on the processor, wherein the processor, when executing the computer program, implements the method according to any of claims 1-8.
